# EUROPEAN PATENT SPECIFICATION

(11) **EP 4 001 353 B1**
(45) Date of publication and mention of the grant of the patent: **21.10.2026**
(21) Application number: 21209101.1
(22) Date of filing: 18.11.2021
(51) Int. Cl.: C08J 9/40

(54) **HYDROPHOBIC/OLEOPHOBIC MATERIAL**
HYDROPHOBES/OLEOPHOBES MATERIAL
MATÉRIAU HYDROPHOBE/OLÉOPHOBE

(30) Priority: 18.11.2020 GB 202018146
(43) Date of publication of application: 25.05.2022
(73) Proprietor: Malvern Optical Limited, Pershore, Worcestershire WR10 2JH (GB)
(72) Inventor: Childs, Simon, Droitwich, WR9 7SG (GB); Allsopp, Ben, Stratford-upon-Avon, CV37 0SW (GB)
(74) Representative: Sandersons

(56) References cited:
- CN-A- 111 073 031
- US-A1- 2008 280 126
- US-A1- 2009 005 466
- US-A1- 2012 107 558
- GE BO ET AL: "A superhydrophobic monolithic material with tunable wettability for oil and water separation", JOURNAL OF MATERIAL SCIENCE, KLUWER ACADEMIC PUBLISHERS, DORDRECHT, vol. 50, no. 6, 23 January 2015 (2015-01-23), pages 2365 - 2369, XP035437289, ISSN: 0022-2461, [retrieved on 20150123], DOI: 10.1007/S10853-014-8756-4

## Description

The present invention relates to hydrophobic/oleophobic materials. Hydrophobicity and oleophobicity are the physical properties of being highly repellent (or, more accurately, weakly attracted) to water and oil, respectively. The term "hydrophobic/oleophobic" is used herein to refer to materials exhibiting hydrophobic properties or oleophobic properties, or both hydrophobic and oleophobic properties.

Hydrophobic/oleophobic substances, on their own, can often lack the desired structural properties for use in certain applications. For this reason, hydrophobic/oleophobic materials are typically manufactured by applying a surface layer of a hydrophobic/oleophobic substance onto a substrate which does have the desired structural properties. If the surface layer of the material becomes damaged, for example by impact, scratching or peeling, this can expose the underlying substrate and severely impair the hydrophobicity/oleophobicity of the material. CN111073031A describes a hydrophobically modified melamine sponge. Bo Ge et al describe "A superhydrophobic monolithic material with tunable wettability for oil and water separation". US2009/0005466A1, US2012/0107558A1 and US2008/0280126A1 each describe hydrophobic/oleophobic materials.

It is desired to provide improvements relating to hydrophobic/oleophobic materials.

Thus, according to an aspect of the present invention there is provided a method of manufacturing a hydrophobic and/or oleophobic material comprising: providing an open cell structure having a plurality of interconnected cells; providing a resin solution containing nanoparticles; introducing the resin solution containing nanoparticles into the interconnected cells of the open cell structure; and curing the resin solution containing nanoparticles within the interconnected cells of the open cell structure, wherein prior to the resin solution being cured therewithin, the open cell structure is resiliently compressible and expandable, wherein the method further comprises compressing the open cell structure during and/or after the curing of the resin solution within the interconnected cells.

The Applicants have identified that, by curing a resin solution containing nanoparticles within the interconnected cells of an open cell structure, a highly hydrophobic/oleophobic material can be produced. Furthermore, the material can exhibit isotropic properties. For example, the material can remain hydrophobic/oleophobic even when the surface of the material is severely damaged.

In embodiments, the open cell structure may be provided as a sheet. Thus, the open cell structure may have a thickness which is significantly less than its width/length. The ratio of the thickness to the width and/or length may be 1:x, where x is at least 10, for example at least 20. The open cell structure may be formed of a polymer, such as polyurethane. The open cell structure may be an open cell foam structure. Thus, providing the open cell structure may comprise foaming and then setting a polymer. The open cell structure may have a cell density in the range 5-40 cells per cm, for example in the range 15-30 cells per cm. As discussed above, prior to the resin solution being cured therewithin, the open cell structure is resiliently compressible and expandable. As will be discussed in more detail below, resilient compression and expansion of the open cell structure can assist with drawing the resin solution containing nanoparticles into the interconnected cells.

The resin may comprise any desired and suitable, for example "low surface energy", resin. The resin may, for example, comprise a fluoro resin, a siloxane resin, or a fluoro-siloxane resin. The resin solution may comprise 5-25 %wt resin.

The resin solution may also comprise any desired and suitable solvent, for example which dissolves the resin but does not dissolve the nanoparticles and/or open cell structure. The solvent may comprise an organic solvent. The solvent may, for example, comprise acetone, butanone, xylene, isopropanol, ethyl acetate or propylene glycol methyl ether acetate. The resin solution may comprise 60-90 %wt solvent.

The nanoparticles may also be formed of any desired and suitable, for example non-metallic or metallic, substance. The nanoparticles may, for example, be formed of silica (e.g. fumed silica), nickel and/or iron. The nanoparticles may have at least one dimension which is less than 100 nm. The nanoparticles may have at least one dimension which is in the range 1-100nm, for example in the range 10-75nm. The resin solution may comprise 5-15 %wt nanoparticles.

In embodiments, providing the resin solution may comprise dissolving the resin in the solvent. Providing the resin solution containing nanoparticles may comprise adding the nanoparticles to the resin solution. The nanoparticles may be added to the solvent prior to, during and/or after the dissolving of the resin in the solvent. The method may further comprise mixing the resin solution containing nanoparticles. Mixing the resin solution containing nanoparticles may comprise high-shear mixing. These embodiments can help to ensure full dispersion of the nanoparticles throughout the resin solution.

In embodiments, introducing the resin solution containing nanoparticles into the interconnected cells may comprise immersing the open cell structure in the resin solution (e.g. in a container which holds the resin solution). This can allow the resin solution to be drawn into the interconnected cells by capillary action. Introducing the resin solution containing nanoparticles into the interconnected cells may further comprise compressing the open cell structure and then allowing the open cell structure to expand resiliently whilst immersed in the resin solution (e.g. whilst in the container which holds the resin solution). This can further help to draw the resin solution into the interconnected cells by creating a lower pore pressure. The open cell structure may be at least partially or fully saturated with the resin solution following introduction of the resin solution containing nanoparticles into the interconnected cells of the open cell structure. The open cell structure may be removed from the resin solution (e.g. removed from the container which holds the resin solution) prior to curing the resin solution containing nanoparticles within the interconnected cells.

In embodiments, the method may further comprise removing an excess of resin solution from the open cell structure prior to curing the remaining resin solution within the interconnected cells. Removing an excess of resin solution may comprise allowing the excess resin solution to leave the open cell structure under gravity. Removing an excess of the resin solution may also or instead comprise compressing the open cell structure to force the excess resin solution to leave the open cell structure. Compressing the open cell structure to remove the excess of resin solution may be achieved using compression rollers and/or compression plates. Compressing the open cell structure can help to accelerate the process of removing the excess of resin solution from the open cell structure.

In embodiments, curing the resin solution containing nanoparticles within the interconnected cells may take place over a period of time in the range 12-36 hours, for example in the range 18-30 hours. Curing the resin solution containing nanoparticles within the interconnected cells may take place at a temperature in the range 5-45 °C, for example in the range 15-35 °C.

As discussed above, the method further comprises compressing the open cell structure during and/or after the curing of the resin solution within the interconnected cells. This can help to make the resultant material tougher whilst still remaining flexible. Compressing the open cell structure during and/or after the curing of the resin solution within the interconnected cells may be achieved using compression rollers and/or compression plates. The compression ratio (i.e. thickness of the open cell structure prior to compression : thickness of the open cell structure after compression) used when compressing the open cell structure during and/or after the curing of the resin solution within the interconnected cells may be in the range 5:1-20:1, for example in the range 7:1-14:1. It has been identified that lower compression ratios can be undesirable since they may lead to the material expanding resiliently following the compression. It has also been identified that greater compression ratios can be undesirable since they may lead to a dense/smooth material having reduced hydrophobicity/oleophobicity. The thickness of the open cell structure prior to compression may be in the range 10mm-75mm, for example in the range 15mm-50mm. The compression ratio may be achieved using a predetermined applied pressure. The compression ratio may also or instead be achieved by a predetermined minimum spacing between compression rollers and/or compression plates. The predetermined minimum spacing between compression plates may be maintained using a shim between the compression plates, with the shim being substantially incompressible at the applied pressure.

In embodiments, compressing the open cell structure during and/or after the curing of the resin solution within the interconnected cells may take place over a time period in the range 1-7 minutes, for example in the range 3-5 minutes. Compressing the open cell structure during and/or after the curing of the resin solution within the interconnected cells may take place at a temperature in the range 125-200 °C, for example in the range 150-175 °C.

In embodiments, the method may further comprise abrading one or more surfaces of the material. This can help to roughen the surface of the material and thereby further improve the hydrophobicity/oleophobicity of the material and/or thereby modify its optical appearance, for example making it more matt in appearance.

It will be appreciated that the expression "hydrophobic/oleophobic" used herein is intended to encompass materials which are either hydrophobic or oleophobic, or are both hydrophobic and oleophobic. The term "hydrophobic" may indicate a contact angle for a surface water droplet of at least 90° at standard temperature and pressure, with a greater contact angle indicating greater hydrophobicity. Similarly, the term "oleophobic" may indicate a contact angle for a surface oil droplet of at least 90° at standard temperature and pressure, with a greater contact angle indicating greater oleophobicity.

By way of example only, embodiments of the invention will now be described in detail with reference being made to the accompanying drawings in which:
**Figure 1** illustrates a method of manufacturing a hydrophobic/oleophobic material according to an embodiment of the present invention;
**Figure 2** is a close-up view of a hydrophobic/oleophobic material according to an embodiment of the present invention taken with a scanning electron microscope; and
**Figure 3** shows a hydrophobic/oleophobic material according to an embodiment of the present invention with test liquid droplets thereon.

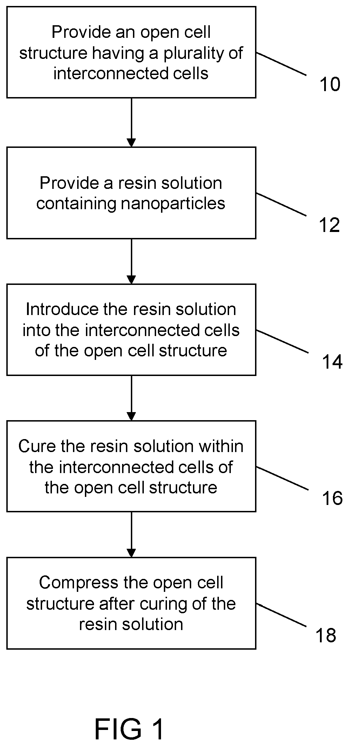

Figure 1 illustrates a method of manufacturing a hydrophobic/oleophobic material. In step 10 of the method, an open cell structure having a plurality of interconnected cells is provided. In this embodiment, the open cell structure comprises a sheet of polyurethane foam having a thickness in the range 10mm-75mm and a cell density in the range 5-40 cells per cm.

In step 12, a resin solution containing nanoparticles is provided. The resin solution is prepared by dissolving a "low surface energy" fluoro, siloxane or fluoro-siloxane resin in an organic solvent such as acetone, butanone, xylene, isopropanol, ethyl acetate or propylene glycol methyl ether acetate. Nanoparticles having at least one dimension which is in the range 1-100 nm are added to the resin solution and thoroughly dispersed using a high-shear mixer. In this embodiment, the nanoparticles are formed of silica, nickel or iron, but other suitable substances could be used. In this embodiment, the resin solution comprises 5-25 %wt resin, 60-90 %wt solvent and 5-15 %wt nanoparticles, for example 15g resin, 85g solvent and 10g nanoparticles.

In step 14, the resin solution is introduced into the interconnected cells of the open cell structure by immersing the open cell structure in a container which holds the resin solution. The open cell structure is compressed and then allowed to expand resiliently whilst in the container in order to draw the resin solution into the open cell structure. The open cell structure is then removed from the container and an excess of resin solution is removed by a combination of dripping under gravity and gentle compression of the open cell structure using compression rollers or plates.

In step 16, the resin solution within the interconnected cells of the open cell structure is cured. In this embodiment, curing takes place over a period of time in the range 12-36 hours at a temperature in the range 5-45 °C.

In step 18, the open cell structure is then compressed using compression rollers or plates. This can help to make the resultant material tougher whilst still remaining flexible. In this embodiment, the compression ratio is in the range 5:1-20:1. The desired compression ratio is achieved by spacing the rollers appropriately or by placing an appropriately sized shim between the compression plates. In this embodiment, the compression takes place over a period of time in the range 1-7 minutes at a temperature in the range 125-200 °C. The surface of the material is then abraded to roughen the surface of the material and thereby further improve the hydrophobicity/oleophobicity of the material, and modify its optical appearance. Contact angles of ~155° for water, ~120° for engine oil and hydraulic fluid, and ~95° for diesel, have been achieved by following the above method.

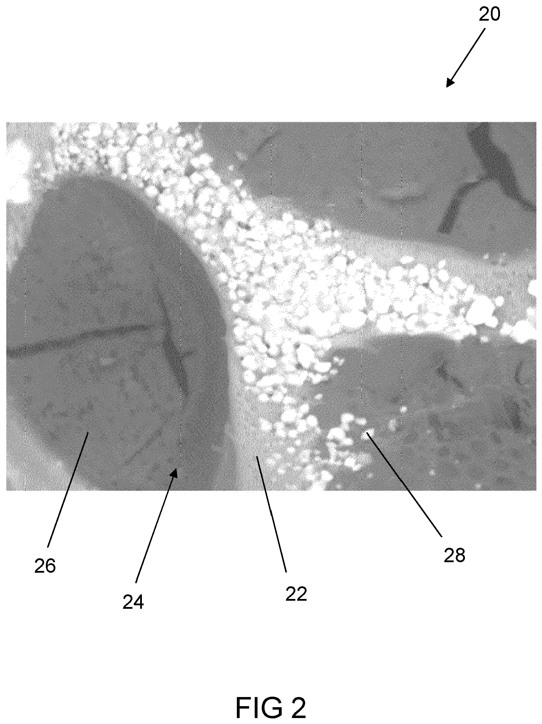

Figure 2 is a close-up view of a hydrophobic/oleophobic material 20 formed using the above method. This view was obtained using a scanning electron microscope. As is shown, the material 20 has an open cell structure 22 having a plurality of interconnected cells 24. The interconnected cells 24 of the open cell structure 22 have a cured resin solution 26 containing nanoparticles 28 therewithin. The nanoparticles 28 in the region of the open cell structure 22 are most visible in this view, but the nanoparticles 28 are also dispersed throughout the cured resin 26.

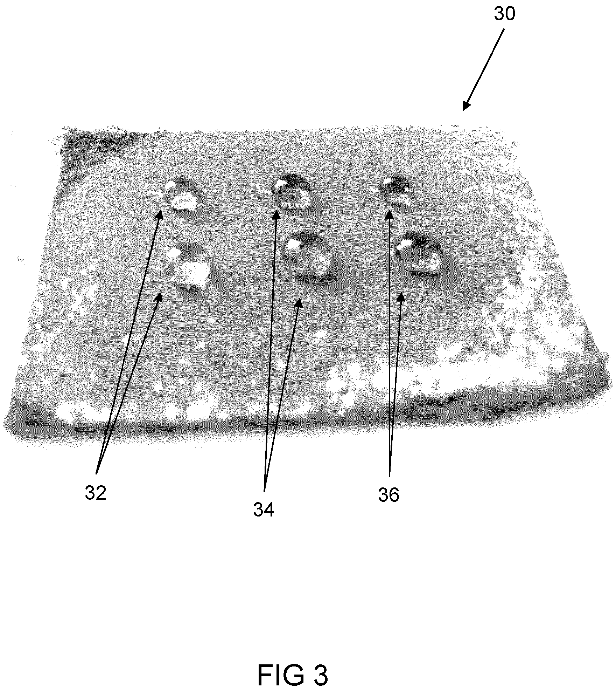

Figure 3 also shows a hydrophobic/oleophobic material 30 formed using the above method. The material 30 has pairs of test liquid droplets thereon. The first pair of droplets 32 are engine oil, the second pair of droplets 34 are hydraulic fluid, and the third pair of droplets 36 are 2-stroke oil. The oleophobic nature of the material 30 is clearly evident from this Figure 3 from the manner in which the droplets 32, 34, 36 sit on the surface of the material 30.

## Claims

1. A method of manufacturing a hydrophobic and/or oleophobic material (20) comprising: providing an open cell structure (22) having a plurality of interconnected cells (24); providing a resin solution (26) containing nanoparticles (28); introducing the resin solution (26) containing nanoparticles (28) into the interconnected cells of the open cell structure (22); and curing the resin solution (26) containing nanoparticles (28) within the interconnected cells (24) of the open cell structure (22), wherein prior to the resin solution (26) being cured therewithin, the open cell structure (22) is resiliently compressible and expandable, **characterised in that** the method further comprises compressing the open cell structure (22) during and/or after the curing of the resin solution (26) within the interconnected cells (24).

2. A method as claimed in claim 1, wherein the open cell structure (22) is formed of a polymer and/or wherein the open cell structure (22) has a cell density in the range 5-40 cells per cm.

3. A method as claimed in claim 1 or 2, wherein the resin solution (26) comprises 5-25 %wt resin and/or wherein the resin comprises a fluoro resin, a siloxane resin, or a fluoro-siloxane resin.

4. A method as claimed in any one of the preceding claims, wherein the resin solution (26) comprises an organic solvent, optionally wherein the solvent comprises acetone, butanone, xylene, isopropanol, ethyl acetate or propylene glycol methyl ether acetate.

5. A method as claimed in any one of the preceding claims, wherein the resin solution (26) comprises 60-90 %wt solvent.

6. A method as claimed in any one of the preceding claims, wherein the nanoparticles (28) are metallic or non-metallic and/or wherein the nanoparticles (28) have at least one dimension in the range 1-100 nm.

7. A method as claimed in any one of the preceding claims, wherein the resin solution (26) comprises 5-15 %wt nanoparticles.

8. A method as claimed in any one of the preceding claims, wherein introducing the resin solution (26) containing nanoparticles (28) into the interconnected cells (24) comprises immersing the open cell structure (22) in the resin solution (26), optionally wherein introducing the resin solution (26) containing nanoparticles (28) into the interconnected cells (24) further comprises compressing the open cell structure (22) and then allowing the open cell structure (22) to expand resiliently whilst immersed in the resin solution (26).

9. A method as claimed in any one of the preceding claims, wherein the open cell structure (22) is at least partially or fully saturated with the resin solution (26) following introduction of the resin solution (26) containing nanoparticles (28) into the interconnected cells (24) of the open cell structure (22).

10. A method as claimed in any one of the preceding claims, wherein the method further comprises removing an excess of resin solution (26) from the open cell structure (22) prior to curing the remaining resin solution (26) within the interconnected cells (24), optionally wherein removing the excess of resin solution (26) comprises at least one of i) allowing the excess resin solution (26) to leave the open cell structure (22) under gravity and ii) compressing the open cell structure (22) to force the excess resin solution (26) to leave the open cell structure (22).

11. A method as claimed in any one of the preceding claims, wherein curing the resin solution (26) containing nanoparticles (28) within the interconnected cells (24) takes place at least one of i) over a period of time in the range 12-36 hours and ii) at a temperature in the range 5-45 °C.

12. A method as claimed in any one of the preceding claims, wherein the compression ratio used when compressing the open cell structure (22) during and/or after the curing of the resin solution (26) within the interconnected cells (24) is in the range 5:1-20:1, and/or wherein compressing the open cell structure (22) during and/or after the curing of the resin solution (26) within the interconnected cells (24) takes place over a time period in the range 1-7 minutes and/or at a temperature in the range 125-200 °C.

13. A method as claimed in any one of the preceding claims, wherein the method further comprises abrading one or more surfaces of the material (20).

## Patentansprüche

1. Verfahren zur Herstellung eines hydrophoben und/oder oleophoben Materials (20), umfassend: Bereitstellen einer offenzelligen Struktur (22) mit einer Vielzahl von miteinander verbundenen Zellen (24); Bereitstellen einer Harzlösung (26), die Nanopartikel (28) enthält; Einbringen der Nanopartikel (28) enthaltenden Harzlösung (26) in die miteinander verbundenen Zellen der offenzelligen Struktur (22); und Aushärten der Nanopartikel (28) enthaltenden Harzlösung (26) innerhalb der miteinander verbundenen Zellen (24) der offenzelligen Struktur (22), wobei die offenzellige Struktur (22) vor dem Aushärten der Harzlösung (26) in ihrem Inneren elastisch komprimierbar und ausdehnbar ist, **dadurch gekennzeichnet, dass** das Verfahren ferner das Komprimieren der offenzelligen Struktur (22) während und/oder nach dem Aushärten der Harzlösung (26) in den miteinander verbundenen Zellen (24) umfasst.

2. Verfahren nach Anspruch 1, wobei die offenzellige Struktur (22) aus einem Polymer gebildet ist und/oder wobei die offenzellige Struktur (22) eine Zelldichte im Bereich von 5-40 Zellen pro cm aufweist.

3. Verfahren nach Anspruch 1 oder 2, wobei die Harzlösung (26) 5-25 Gew.-% Harz enthält und/oder wobei das Harz ein Fluorharz, ein Siloxanharz oder ein Fluorsiloxanharz umfasst.

4. Verfahren nach einem der vorstehenden Ansprüche, wobei die Harzlösung (26) ein organisches Lösungsmittel umfasst, wobei das Lösungsmittel gegebenenfalls Aceton, Butanon, Xylol, Isopropanol, Ethylacetat oder Propylenglykolmethyletheracetat umfasst.

5. Verfahren nach einem der vorstehenden Ansprüche, wobei die Harzlösung (26) 60-90 Gew.-% Lösungsmittel enthält.

6. Verfahren nach einem der vorstehenden Ansprüche, wobei die Nanopartikel (28) metallisch oder nichtmetallisch sind und/oder wobei die Nanopartikel (28) mindestens eine Abmessung im Bereich von 1-100 nm aufweisen.

7. Verfahren nach einem der vorstehenden Ansprüche, wobei die Harzlösung (26) 5-15 Gew.-% Nanopartikel enthält.

8. Verfahren nach einem der vorstehenden Ansprüche, wobei das Einbringen der Nanopartikel (28) enthaltenden Harzlösung (26) in die miteinander verbundenen Zellen (24) das Eintauchen der offenzelligen Struktur (22) in die Harzlösung (26) umfasst, wobei das Einbringen der Nanopartikel (28) enthaltenden Harzlösung (26) in die miteinander verbundenen Zellen (24) gegebenenfalls ferner das Komprimieren der offenzelligen Struktur (22) und das anschließende elastische Ausdehnenlassen der offenzelligen Struktur (22) umfasst, während diese in die Harzlösung (26) eingetaucht ist.

9. Verfahren nach einem der vorstehenden Ansprüche, wobei die offenzellige Struktur (22) nach dem Einbringen der Nanopartikel (28) enthaltenden Harzlösung (26) in die miteinander verbundenen Zellen (24) der offenzelligen Struktur (22) zumindest teilweise oder vollständig mit der Harzlösung (26) gesättigt wird.

10. Verfahren nach einem der vorstehenden Ansprüche, wobei das Verfahren ferner das Entfernen eines Überschusses an Harzlösung (26) aus der offenzelligen Struktur (22) vor dem Aushärten der verbleibenden Harzlösung (26) innerhalb der miteinander verbundenen Zellen (24) umfasst, wobei das Entfernen des Überschusses an Harzlösung (26) gegebenenfalls mindestens eines der Folgenden umfasst, i) das Abfließenlassen der überschüssigen Harzlösung (26) aus der offenzelligen Struktur (22) unter Einwirkung der Schwerkraft und ii) das Zusammendrücken der offenzelligen Struktur (22), um die überschüssige Harzlösung (26) zum Verlassen der offenzelligen Struktur (22) zu zwingen.

11. Verfahren nach einem der vorstehenden Ansprüche, wobei das Aushärten der Nanopartikel (28) enthaltenden Harzlösung (26) innerhalb der miteinander verbundenen Zellen (24) gegebenenfalls mindestens auf eine der folgenden Arten erfolgt, i) über einen Zeitraum im Bereich von 12-36 Stunden und ii) bei einer Temperatur im Bereich von 5-45 °C.

12. Verfahren nach einem der vorstehenden Ansprüche, wobei das beim Komprimieren der offenzelligen Struktur (22) während und/oder nach dem Aushärten der Harzlösung (26) innerhalb der miteinander verbundenen Zellen (24) verwendete Kompressionsverhältnis im Bereich von 5:1 bis 20:1 liegt, und/oder wobei das Komprimieren der offenzelligen Struktur (22) während und/oder nach dem Aushärten der Harzlösung (26) innerhalb der miteinander verbundenen Zellen (24) über einen Zeitraum im Bereich von 1-7 Minuten und/oder bei einer Temperatur im Bereich von 125-200 °C erfolgt.

13. Verfahren nach einem der vorstehenden Ansprüche, wobei das Verfahren ferner das Abschleifen einer oder mehrerer Oberflächen des Materials (20) umfasst.

## Revendications

1. Procédé de fabrication d'un matériau hydrophobe et/ou oléophobe (20) comprenant : la fourniture d'une structure à cellules ouvertes (22) ayant une pluralité de cellules interconnectées (24) ; la fourniture d'une solution de résine (26) contenant des nanoparticules (28) ; l'introduction de la solution de résine (26) contenant des nanoparticules (28) dans les cellules interconnectées de la structure à cellules ouvertes (22) ; et le durcissement de la solution de résine (26) contenant des nanoparticules (28) au sein des cellules interconnectées (24) de la structure à cellules ouvertes (22), dans lequel, avant que la solution de résine (26) n'y soit durcie, la structure à cellules ouvertes (22) est élastiquement compressible et expansible, **caractérisé en ce que** le procédé comprend en outre la compression de la structure à cellules ouvertes (22) pendant et/ou après le durcissement de la solution de résine (26) au sein des cellules interconnectées (24).

2. Procédé selon la revendication 1, dans lequel la structure à cellules ouvertes (22) est formée d'un polymère et/ou dans lequel la structure à cellules ouvertes (22) a une densité cellulaire comprise dans la plage de 5 à 40 cellules par cm.

3. Procédé selon la revendication 1 ou 2, dans lequel la solution de résine (26) comprend 5 à 25 % en poids de résine et/ou dans lequel la résine comprend une résine fluoro, une résine siloxane, ou une résine fluoro-siloxane.

4. Procédé selon l'une quelconque des revendications précédentes, dans lequel la solution de résine (26) comprend un solvant organique, facultativement dans lequel le solvant comprend de l'acétone, de la butanone, du xylène, de l'isopropanol, de l'acétate d'éthyle ou de l'acétate d'éther méthylique de propylène glycol.

5. Procédé selon l'une quelconque des revendications précédentes, dans lequel la solution de résine (26) comprend 60 à 90 % en poids de solvant.

6. Procédé selon l'une quelconque des revendications précédentes, dans lequel les nanoparticules (28) sont métalliques ou non métalliques et/ou dans lequel les nanoparticules (28) ont au moins une dimension comprise dans la plage de 1 à 100 nm.

7. Procédé selon l'une quelconque des revendications précédentes, dans lequel la solution de résine (26) comprend 5 à 15 % en poids de nanoparticules.

8. Procédé selon l'une quelconque des revendications précédentes, dans lequel l'introduction de la solution de résine (26) contenant des nanoparticules (28) dans les cellules interconnectées (24) comprend l'immersion de la structure à cellules ouvertes (22) dans la solution de résine (26), facultativement dans lequel l'introduction de la solution de résine (26) contenant des nanoparticules (28) dans les cellules interconnectées (24) comprend en outre la compression de la structure à cellules ouvertes (22), puis le fait de permettre à la structure à cellules ouvertes (22) de se dilater élastiquement tout en étant immergée dans la solution de résine (26).

9. Procédé selon l'une quelconque des revendications précédentes, dans lequel la structure à cellules ouvertes (22) est au moins partiellement ou totalement saturée avec la solution de résine (26) à la suite de l'introduction de la solution de résine (26) contenant des nanoparticules (28) dans les cellules interconnectées (24) de la structure à cellules ouvertes (22).

10. Procédé selon l'une quelconque des revendications précédentes, dans lequel le procédé comprend en outre le retrait d'un excès de solution de résine (26) de la structure à cellules ouvertes (22) avant le durcissement de la solution de résine (26) restante au sein des cellules interconnectées (24), facultativement dans lequel le retrait de l'excès de solution de résine (26) comprend au moins l'un parmi i) le fait de laisser la solution de résine (26) en excès quitter la structure à cellules ouvertes (22) par gravité et ii) la compression de la structure à cellules ouvertes (22) pour forcer la solution de résine (26) en excès à quitter la structure à cellules ouvertes (22).

11. Procédé selon l'une quelconque des revendications précédentes, dans lequel le durcissement de la solution de résine (26) contenant des nanoparticules (28) au sein des cellules interconnectées (24) a lieu selon au moins l'un parmi i) pendant un laps de temps compris dans la plage de 12 à 36 heures et ii) à une température comprise dans la plage de 5 à 45 °C.

12. Procédé selon l'une quelconque des revendications précédentes, dans lequel le taux de compression utilisé lors de la compression de la structure à cellules ouvertes (22) pendant et/ou après le durcissement de la solution de résine (26) au sein des cellules interconnectées (24) est compris dans la plage de 5:1 à 20:1, et/ou dans lequel la compression de la structure à cellules ouvertes (22) pendant et/ou après le durcissement de la solution de résine (26) au sein des cellules interconnectées (24) a lieu pendant un laps de temps compris dans la plage de 1 à 7 minutes et/ou à une température comprise dans la plage de 125 à 200 °C.

13. Procédé selon l'une quelconque des revendications précédentes, dans lequel le procédé comprend en outre l'abrasion d'une ou plusieurs surfaces du matériau (20).
